# EUROPEAN PATENT SPECIFICATION

(11) **EP 3 797 867 B1**
(45) Date of publication and mention of the grant of the patent: **20.12.2023**
(21) Application number: 20198339.2
(22) Date of filing: 25.09.2020
(51) Int. Cl.: B01L 3/00, G01N 21/64

(54) **EVANESCENCE BIOSENSOR FOR BLOOD**
EVANESCENCE BIOSENSOR FÜR BLUT
BIOCAPTEUR D'EVANESCENCE POUR SANG

(30) Priority: 28.09.2019 CH 12312019
(43) Date of publication of application: 31.03.2021
(73) Proprietor: Elionova AG, 1700 Fribourg (CH)
(72) Inventor: Schawaller, Manfred, 1700 Fribourg (CH)
(74) Representative: Müller-Boré & Partner Patentanwälte PartG mbB

(56) References cited:
- US-A1- 2004 091 397
- US-A1- 2010 190 197
- US-A1- 2011 005 341
- US-A1- 2019 226 910

## Description

### Technical domain

The present invention concerns a biosensor device suitable for the blood analysis and diagnostics. In particular, it relates to a device combined with a blood filter allowing a reliable and fast biological test.

### Related art

Examining human blood for specific markers is a commonly used method supporting medical diagnoses. A blood sample is taken from the patient and then assayed in a laboratory for the presence or absence of a diagnostic marker or a quantification of a marker. To distinguish from - in vivo - diagnostic procedures done on the patient him/herself, laboratory tests are known as in vitro diagnostics commonly abbreviated as IVD. A commonly used technology of IVD tests is ELISA (Enzyme Linked Immuno Sorbent Assay), used to determine numerous markers in biological fluids and as such supporting a medical diagnosis. The ELISA and related technologies are in widespread use. All ELISAs use a solid well of about 200 microliter volume to examine a patient sample. These wells are made from organic polymer such as polystyrene by an injection moulding process.

Typical assay formats used for immunological ELISA-assays are sandwich assays, competitive assays or antibody assays. A sandwich assay uses two ligands, usually a pair of antibodies both specific for the protein to be measured, examples are tests for Beta Human Chorionic Gonadotropin, beta HCG, other hormones such a Follicle Stimulating Hormone (FSH), Luteinizing Hormone (LH), the infection markers C-Reactive Protein CRP or Procalcitonin PCT, marker proteins for heart attacks such as Troponin I und Troponin T or Myoglobin.

Further well know analytes are low molecular weight compounds like steroids, drugs, drug of abuse or vitamins. The assays are then designed as competitive assays.

Antibody assays are for example the detection of anti-viral antibodies, directed against proteins of viruses such as HIV, HBV of HCV, or the anti-bacterial or anti parasite antibodies. Furthermore, antibody tests are used for the measurement of auto immune antibodies or allergy related IgE.

The principles of different ELISA formats are comparable. One ligand is bound to the inside of an ELISA well. A second ligand is in the solution and can react with the bound ligand or with an analyte that has bound to the immobilised ligand. For an ELISA the ligand in solution is covalently coupled to an enzyme such as horseradish peroxidise of alkaline phosphatase.

Diffusion makes the labelled ligand in solution to move to the well surfaces and reacts with the surface bound ligand. A typical assay is done that after a certain incubation time of reaction, 30-120 min, the analyte solution with excess labelled ligand is removed and the well are washed with a buffer solution. The bound ligand-enzyme conjugate bound to the well is measured by reacting it with a suitable chromogenic substrate giving a coloured product suitable for quantification.

Advantages of ELISA are a high sensitivity and specificity. The analytical detection limits are given by the ligands and their affinities. An important component for the quality are the compositions of the buffers, analytes in the range from 10exp-6 mol/L and 10exp-12 mol/L can be measured, in exceptional cases detection limits of 10exp-13 mol/L have been reached. Even considering all the advantages of ELISA, the need for numerous working steps is a definite disadvantage. Several pipetting and washing steps to remove excess unbound ligands are required and the time-to-result is typically in the range of hours before a result can be read. During this time a treating physician has to wait for an IVD result that will support or dismiss his clinical diagnosis and therefore a directed evidence based therapy is delayed.

An improved method for clinical analytes is the use of biosensors. One popular method is the use of evanescence field excitation of bound analytes and real-time detection of bound molecules as described in EP1079226, EP1204856, EP1371967 or application examples in EP2639584 and Schawaller et al. J Allergy Clin Immunol. 2018. The method is based, just as ELISA, on the Interaction of a surface bound ligand reacting in a non-covalent manner with at least one ligand from the solution in contact with the surface. The reaction takes place in a well produced from an organic polymer such as polystyrene by injection molding. The ligand in the solution is not labelled with an enzyme as in ELISA but instead with a fluorescent labelled moiety. This fluorescent marker is then excited with a suitable light source, preferably of 635 nm wavelength, and the emitted fluorescence is continuously monitored using a dedicated instrument. The method allows the real-time continuous monitoring of a biochemical binding reaction.

Several advantages come with this, such as a specific excitation of bound fluorescently labelled ligand in the presence of excess non-bound ligand in the solution. A sensitive and quantitative result is measure typically after 10 to 20 min or even less time, whereas an ELISA result is available only after several hours.

Another advantage is that after adding the patient sample and the fluorescent second ligand no further liquid manipulation steps as in ELISA are required. Notably, washing steps and an addition of enzyme substrates are not required. The method uses aqueous solutions such as PBS, neat or with additional reagents as for example detergents, surfactants, proteins or reaction enhancers. Samples to be measured can be urine saliva, serum plasma or detergent solubilised blood.

Unfortunately and a first disadvantage of the current method is that a end-user cannot use directly blood but has to prepare blood plasma outside of the measuring device using for example a centrifugation or a filtration to remove cellular parts of whole blood such as erythrocytes, leucocytes or platelets.

A second disadvantage of the current device as described in the references above is the requirement to add to the patient sample, i.e. plasma or serum, a fluorescently labelled second ligand and the mixture is transferred to the well and measured. This is not only associated with manipulations and hence time but also can be a source of error.
US 2019/226910 A1 describes porous mesh spectrometry methods and an apparatus.
US 2004/091397 A1 describes a multiwell insert device that enables label free detection of cells and other objects. US 2011/005341 A1 describes a filtering apparatus for filtering a fluid. US 2010/190197 A1 describes a nested permeable support device and a method for using the nested permeable support device.

### Short disclosure of the invention

An aim of the present invention is the provision of a device that overcomes the shortcomings and limitations of the state of the art.

Another aim of the invention is to provide an improved method of diagnostic using a ready-to-use biosensor device.

According to the invention, these aims are attained by the device and the method described in the attached claims.

With respect to what is known in the art, the invention provides the advantage that.

In particular, the device according to the present disclosure allows the separation of blood plasma from the cells or to remove the cells form whole blood and just have blood plasma. It is understood it could be also blood serum that could be used in the device. The removal of the cells present in the blood is essential as the cell sediment by gravity to the bottom of the well in a very short time of about several minutes. When the bottom of the well is covered with cells, the analytes cannot any more diffuse to the bottom of the well as well as a detector reagent cannot reach the sensing surface, hence an increase in signal over time cannot be observed.

Separating blood cells from blood plasma can be achieved by placing a filter directly onto the sensing surface. This filter is with the property to block the passage of cells and here mainly the red cells to sediment to the sensing surface. Molecules in plasma, which are commonly the analyte to be measured are much smaller in their dimensions when compared to cell and the pore size of the filter is chosen to be large enough to let analytes such as proteins, immune globulins, peptide to page the pores of the blood filter but to block the passage of the cellular components of blood. The filtration of red cell agglutinates is applied in the gel test for immune haematology where a blood filtration process is used that allow the passage of individual red cells but does not allow the passage of red cell agglutinates through the gel matrix. Two major differences to the gel test are evident. First, the gel is in a liquid suspension deposited into the reaction cavity whereas in the present invention It is in a dry form and the blood plasma brings the liquid. Second the pore size in the gel test is optimised for the passage of individual red cells and the blockade of the movement of red cell agglutinates. In the present invention fibre / mesh / fabric it is intended to block the movement of all cell through the matrix. This can be achieved through the selection of a filter membrane with much smaller pore sizes than cell diameters to block the movement of red cells through the filtration membrane. Numerous blood filtration membranes exist and are offered commercially by Millipore, Ahlstrom or Pall. Their use as blood filtration membrane of their use as release pads for reagent is routinely documented and in routine use in immune chromatographic device also known as lateral flow devices. Another possibility is the use of Whatman filtration paper such as Whatman 3 MM or the like.

One can now use readymade paper and cut it to fit on the bottom of the well. As paper is produced by using a cellulose fibre suspension and removing the liquid by drying, it is evident that producing a paper filter in the well can also be achieved by making a suspension of cellulose fibres in water and adding this suspension into the sensor well. Airdrying will then generate the filter paper directly within the well. Paper can also made from organic polymer such as Polyamide und consequently or the organic fibres such as used in textile fabrication can be used instead of the cellulose fibres. To ensure an easy wetting process hydrophilic material is preferred.

Another possibility is to use an antibody against cell surface proteins and as such generate cell agglutinates. This can be anti-band 3 antibodies, band 3 is an abundant red cell surface protein, to agglutinate red cells into larger cell aggregates or anti HLA antibodies to agglutinate all nucleated cells present in the blood or the use a mixture of cell agglutinating antibodies.

Another possibility to prevent the blood cell form sedimenting is the agglutination of the blood cells using Hexamethrine bromide commonly known as Polybrene. Other polymeric compounds such as Protamine sulfate can be used as well.

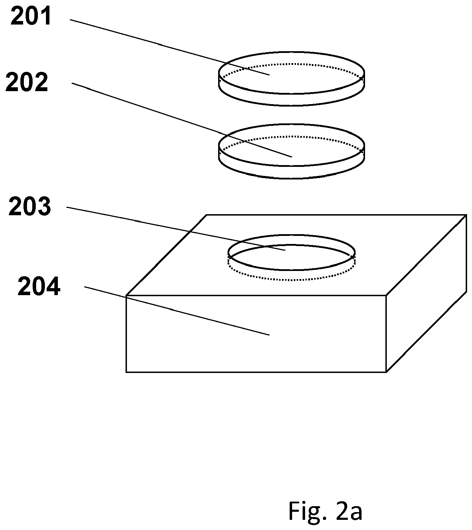

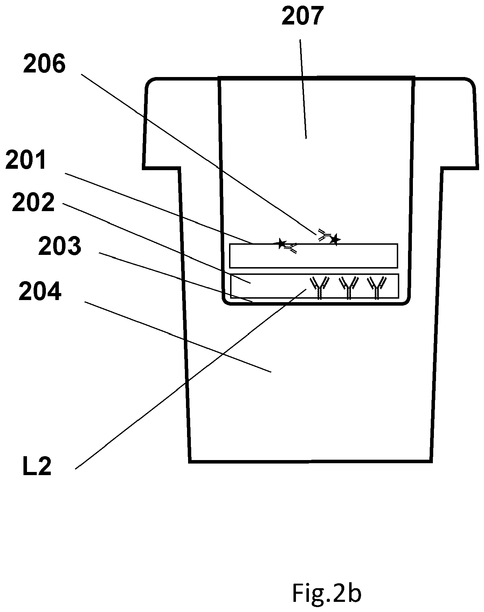

Another possibility is to use not just one filter unit but instead use several filtration units in tandem in a sequential arrangement as for examples depicted in Fig 2a, 2b.

A cell has typically a diameter from at least 2 micrometres for a read cell to about 100 micrometres for a leukocyte. Biological analytes such as proteins, immune globulins, hormones peptide all have molecular dimensions of typically 10 nanometers or less. Low molecular weight chemical of 2kD or less have molecular dimensions in the low nanometre range. Cells may be separated from the protein analytes by their size, using a filtering means, such as a fabric. The process is best described as a filtration process. The liquid blood plasma absorbs to the fabric mesh and is absorbed there. The driving force is the capillary force. The movement of the liquid by capillary forces is driven by three factors 1) gravity 2) capillarity, the smaller the inter-fibre spaces the stronger the capillary force and 3) hydrophilicity, for an aqueous liquid such as human plasma and hydrophilic mesh / fabric is a favorable design.

Alternatively, the sedimentation of the cells may be preventing by generating or including a high-density liquid layer above the bottom of the well. This can be achieved by adding sucrose in the well and drying it. Upon dissolution by the water in the biological sample, blood, the sucrose dissolves and a high density sucrose solution forms over the bottom of the well where the 200 nm deep evanescent sensing field is located. Instead of sucrose other sugar molecules can be used. Furthermore, one can substitute by an organic hydrophilic polymer such as Saccharose-Epichlorhydrin-Copolymer giving with the water from the biological samples high density aqueous solutions and preventing the cells to sediment to the sensing surface. Saccharose Epichlorhydrin Copolymer is commonly known and commercially available as Ficoll. Yet another possibility is the use of Percoll which consists of colloidal silica coated with polyvinylpyrrolidone and generated with water a high-density solution at the bottom of he well an preventing the sedimentation of the cells to the sensing surface.

Alternatively, the sedimentation on the sensing surface where the evanescent field is generated is the sensing of the biomolecular interaction not at the bottom of the well but on a side wall of the well. As cells sediment by gravity to the bottom, the sensing surface is not covered by sedimenting cells and a measurement is possible.

The present invention simplifies the current biosensor system by integrating the fractionation of blood into a cellular and a plasma part and by placing the fluorescently labelled second ligand in the well in dried form.

The fractionation of blood and the separation in blood cell and blood plasma/serum is achieved by a blood filtration process. There are numerous materials for blood filtration available usually as a mesh of fabric the use is then to cut the fabric into a suitable geometrical form. This would then be placed directly on the sensor surface. Technically this can be achieved by positioning of the fabric directly on the sensing surface. This positioning is a distance less than the evanescent field i.e. within 200 nm. Then the fluorescently labelled ligand will be pipetted onto the fabric mesh and dehydrated for storage either by example air drying and or lyophilisation.

An improvement of the invention of a mesh of fabric difficult to position accurately is the use of a blood filtration using a blood filtration layer that is generated and produced directly in the well and directly on the sensing surface. The blood filtration layer consists of a mesh / fabric dried on the sensing surface of a biosensor well. To achieve this the mesh can be made from inorganic or organic materials such as for examples glass, carbon, synthetic organic polymers or from natural sources such a gelatine or cellulose.

To prepare a test device for use with whole blood the steps are:
1 Coat the sensing surface at the bottom of the well surface with binding ligand
2 Add a blood filtration layer on top of the sensing surface. This surface is capable of letting blood plasma to pass and soak the filter located directly on the sensing surface completely.
3 Remove the liquid by a suitable method such as air drying and/or lyophilisation.
4 Add the fluorescently labelled ligand 2 to the blood filter layer

Another way to prepare a test device for use with whole blood the steps are:
1 Coat the sensing surface at the bottom of the well surface with binding ligand 1.
2 Add the fluorescently labelled ligand 2 in the well and remove the liquid by a suitable method such as air drying and/or lyophilisation.
3 Add a blood filtration layer directly in close contact on top of the sensing surface. This surface is capable of letting blood plasma to pass and soak the filter located directly on the sensing surface completely.

The device, when prepared as above described, contains a surface bound ligand binding the analyte, and a fluorescently labelled dry detector ligand on the blood filtration fabric mesh. By adding blood to the device the fluorescently labelled ligand is solubilised upon the addition of the blood. The fluorescent ligand reacts with the analyte to be determined present in the blood sample. The filter layer effectively retains the cells present in the blood sample and essentially only blood plasma / serum traverses the filter layer to the bottom of the well. Subsequently the analytes in the blood plasma react with the surface bound ligand. Thus, a fluorescent signal is generated. Labelled ligand bound to the analyte diffuses in a concentration dependant manner according to Fick's second law of diffusion to the sensing surface. A time dependant signal increase is observed over a range of 1 to 120 minutes as the trimolecular complex composed of surface bound ligand - analyte-fluorescently labelled ligand forms at the bottom of the well over time. Only here where the evanescent field of the excitation light is formed fluorophore are illuminated with excitation light, consequently and absorbs photons and consequently emits photons that are measured quantitatively in real-time.

### Short description of the drawings

Exemplar embodiments of the invention are disclosed in the description and illustrated by the drawings in which:
- Figure 1 shows the optically one-way device described in EP1371967.
- Figure 2a shows a schematic explosion picture of the device according to an embodiment of the present disclosure.
- Figure 2b shows the assembled device according to an embodiment of the present disclosure.
- Figure 3 shows a schematic arrangement of a filter according to the present disclosure, when it is packed and dry.

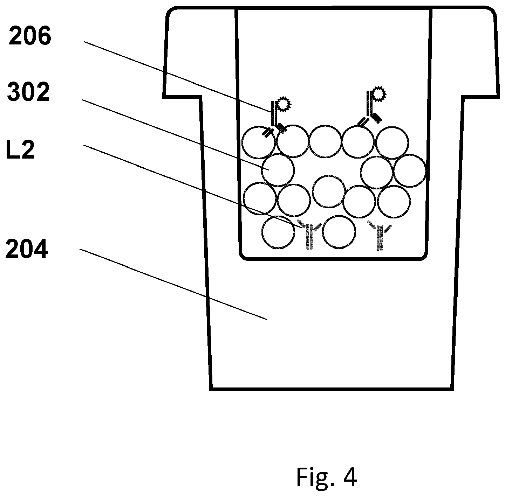

- Figure 4 shows the filter in an evanescence biosensor well according to the present disclosure.
- Figure 5 shows the assembly of a device according to the present disclosure.

### Examples of embodiments of the present invention

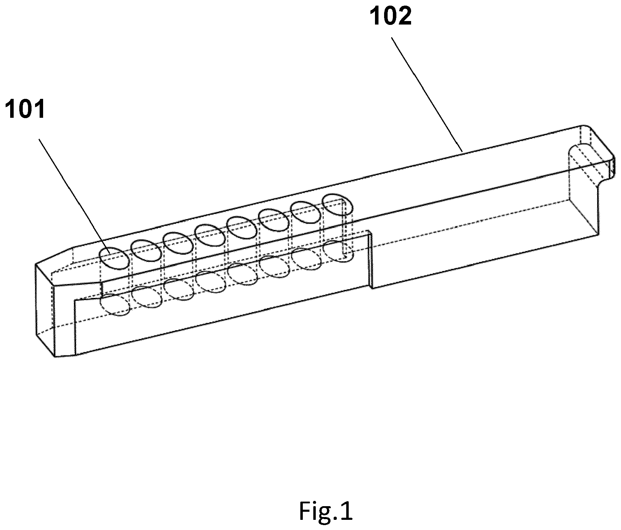

Figure 1 shows the optically one-way device **102** according to the prior art. Individual wells **101** contain the chemical reagents to perform and measure analytes with a binding assay. Reagents and blood samples have been involved to several steps of preparation, including filtrations and washing steps, prior to their analysis through the device **102.**

Referring to figures 2a and 2b, the device according to the present disclosure comprises a bottom recipient **204.** having a sample area **207** where to place a biological sample to be analysed. The biological sample may be directly placed within the sample area **207.** Alternatively, a vial comprising a biological sample may be inserted in the sample area **207.** Such a vial is transparent or comprises at least one transparent surface so as to allow optical detection of the sample it contains.

The biological sample denotes any biological fluid taken out of the body such as blood, lymphatic fluid, saliva, urine and the like. In particular it denotes blood. The biological sample preferably refers to a crude biological fluid, meaning that it has not been previously involved in a filtration step or in a washing step. In other words, the sample comprises all its original components, including biological cells, analytes, proteins, and any molecules present at the moment it has been taken out of the body. In particular, when the sample is blood, it comprises all the cells, such as the red cells, as well as the serum and the molecules comprised therein.

The analyte denotes any component present in the sample, being object of the biological analysis. The analyte denotes in particular small parts of the sample, having dimensions below 1 micrometre, preferably below 100 monometers, or below around 10 nanometres. In particular, the analyte denotes one or more molecules such as peptides, proteins, amino-acids, hormones, immune-globulins, nucleic acids, and fractions thereof or combination thereof.

The bottom recipient **204** comprises a surface detection allowing to sense and analyse the biological sample using optical means. In particular, the surface detection is evanescent sensing surface **203** . The evanescent sensing surface **203** may be for example arranged at the bottom of the sample area **207** so as to allow optical detection from the bottom part of the device, below the sample. Alternatively, the evanescent sensing surface **203** corresponds to a lateral wall of the sample area **207,** allowing the optical detection from a side of the device.

The device may be provided or combined with optical elements such as one or more prisms, optical filter **509,** and a light measuring unit such as a photodiode or a photomultiplier **510.**

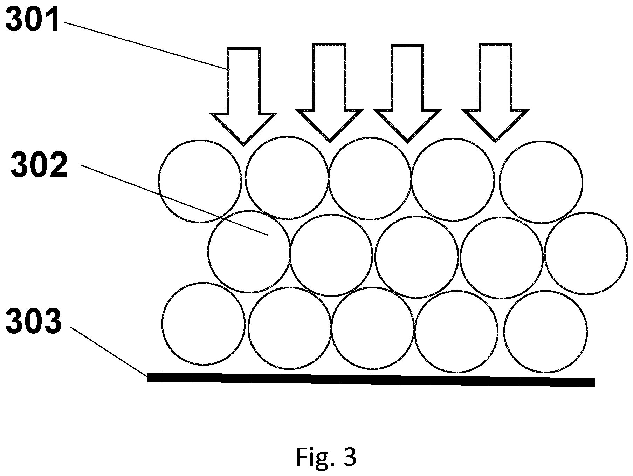

The device according to the present disclosure comprises means for separating the analytes from the rest of sample. In particular, the device comprises means for retaining larger parts of the sample and allowing the migration of the smallest parts such as the analytes. In particular, the device is provided with at least one filtering element such as a first filter **201.** Such a first filter may be any known filtering element such as cellulose or fabric or a mesh commonly used to separate biological cells from their targeted molecules. The first filter **201** comprises filter fibres **302** (fig 3) defining an interstitial space **301** defining a porosity. When the evanescent sensing surface **203** is arranged at the bottom of the sample area **207,** a first filter **201** arranged above the evanescent sensing surface **203** allows to maintain the biological cells of the sample remote from the evanescent sensing surface **203.** The biological cells, and in particular the red cells are prevented passing through the interstitial space of the first filter **201** while the targeted molecules flow until the evanescent sensing surface **203.** The porosity of the first filter **201** may be adapted according to the size of the analyte and/or the sample components. The porosity of the first filter **201** may be adapted to block the diffusion of element larger than around 1 micrometre or larger than 10 micrometres, or larger than 100 micrometres.

The first filter **201** may have a regular porosity through its thickness. Alternatively, the first filter **201** may present a decreasing porosity from its top surface, receiving the sample, to its bottom surface, closer to, or corresponding to, the evanescent sensing surface **203.** Alternatively, the first filter **201** may be a combination of to or more layers having different porosities.

The first filter **201** may thus filter out red blood cell of a blood sample, and prevent them covering the evanescent sensing surface **203.**

According to the present invention, the first filter **201** in addition comprises one or more reagents including ligands remaining free within the interstitial space **301.** Such reagent or combination of reagents can thus be diluted in a sample and react with targeted analytes. According to the present invention, the first filter **201** comprises at least a first ligand **L1** carrying a fluorescent label to form a fluorescently labelled ligand **206.** The reagent or the combination of reagents may be added to the first filter **201** within a solution and then remain within the first filter **201** after a drying step. The first filter **201** may thus be prepared with one or several reagents before being placed or integrated in the device. Alternatively, the first filter **201** may be already integrated within the device and subject to a preparation before practicing the biological analysis of a sample.

The first filter 201, and or the second filter 202, may be for examples commercially available filter such the type of Whatmann or 3MM. Several other type of filter may be used. A paper filter may be produced outside of the well by typically taking a suspension of cellulose fibres in water and removing the water. Alternatively, a mesh of fabric may be directly produce within the device, by adding a suspension slurry of fibres in the well and drying it.

The device according to the present disclosure thus comprises all reagents and necessary components to detect one or more analyte and perform a quantitative assay of a sample such as a blood sample.

The first filter **201** may optionally comprises additives such as anticoagulants. Example of usable anticoagulants are as Heparin or EDTA. These optional additives may be free in the interstitial space **301** or bound to the fibre **302** of the first filter **201.** Anticoagulants allow to prevent the coagulation process to take place and as such act as an additional barrier for the cellular parts of blood and prevent the sedimentation of the cells down to the sensing surface by gravity.

The device of the present disclosure advantageously allows to perform a test from a crude sample without preliminary treatment such as filtrations or washing steps. Then immediately the measurement in the reader is started and after several minutes result can be obtained.

Another advantage is the use of dry reagents, already included in a filter integrated to the device. Such arrangement limits or avoids any errors resulting from mixing up detector reagents or from wrong volumes. A further advantage is the augmented stability of dry reagents in comparison to liquid reagents. As such, the reagents or combination of reagents preconditioned within a filter already integrated to the device allows an improved stability and reproducibility of the biological test.

Yet another advantage is the small measurement volume reducing the need for large amounts of potentially expensive biological reagents making the device more economical when compared to the standard measurement devices. Furthermore, no addition of other solutions or reagents is required to obtain a result. Adding a patient sample such as whole blood, plasma serum saliva urine etc. bring the solvent water, which dissolves the dried reagents in the well and the measurement starts. This is in contrast to other laboratory methods where inevitably a liquid solution is supplied with the test and is an essential requirement to perform the test.

The evanescent sensing surface **203** may be coated with at least a second ligand **L2** allowing to bind the targeted analyte, either alone or combined with a fluorescently labelled ligand **206.** The evanescent sensing surface **203** being placed below the first filter **201,** it remains free of the largest elements of the sample which would otherwise prevent a good optical analysis.

Alternatively, the second ligand **L2** is placed within a second filter **202** arranged below the first filter **201.** The second filter **202** is placed on or near the evanescent sensing surface **203** so as to allow the optical detection and measurement. In particular, when the filter is full of blood plasma or blood serum, then liquid stays in the filter. The binding reaction with the second ligand **L2** is measure while the sample remains within the mesh.

The terms "below" and "above" have the usual meaning. In particular, the orientation of the device according to the present disclosure is as represented in the figures. The first filter **201** is thus above the second filter **202,** the sample being placed in the sample area **207** and subject to the natural gravity from the top to the bottom part of the device.

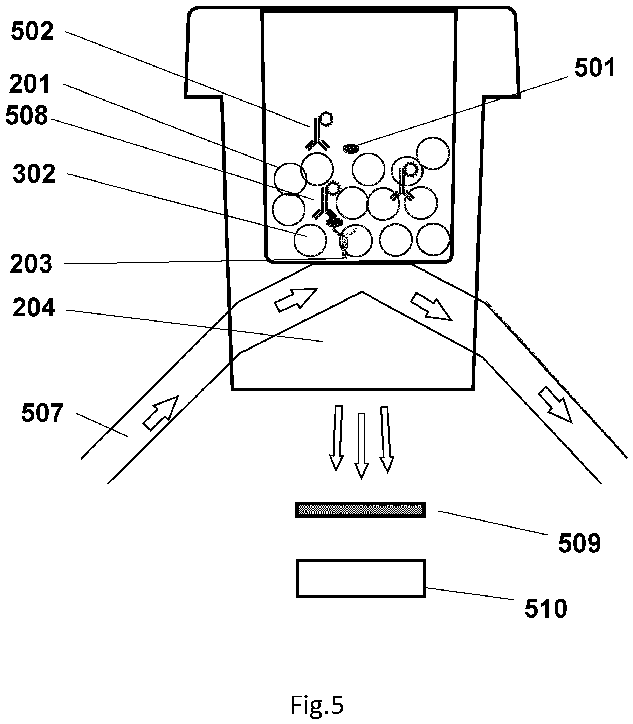

Referring to figure 5, the second ligand **L2** is bound on the evanescent sensing surface **203.** The fibres **302** allow the analyte **501** combined to a fluorescent conjugate **502** to elute and bound to the second ligand **L2,** while the labelled conjugate **502** remain in suspension within the sample. The exiting light beam **507** entering the bottom part **204** of the device is reflected at the sensing surface **203.** The resulting light emitted from bound fluorophor **508** is filtered through an optical unit **509** and quantitatively measured with a light measuring unit such as a photodiode or a photomultiplier **510.**

### Example : Beta HCG binding assay with whole blood.

An evanescence biosensor chip is coated with 20 µL the beta HCG antigen at 100U per mL in PBS for 2h or more at room temperature. Excess antibody is removed by washing with PBS and followed by a 1h blocking step using 30 µL 1%BSA in PBS 0.025% Tween20. Well are washed consecutively with 2 times with PBS, 2 times with 1% Sucrose and finally air dried. As blood filter one can use either a glass fiber Tissue Ahlstrom Grade 8964 or for example a glass fiber conjugate pad such a Millipore Cat GFCP203000. Filters can be use a a one fliter using or then a tandem combination of both the filters filter layer in the well a 5 fold concentrated reaction mix is added consisting of anti beta HCG monoclonal anti to beta HCG (Hytest 5501 SP-1) APC conjugate produced according to standard procedures using SMCC / SATA chemistry and purified over S-200HR FPLC.

There is further described herein a diagnostic mixture adapted to identify a targeted analyte under evanescent detection conditions. The diagnostic mixture may comprise one or more of a fluorescently labelled detection reagent, an animal protein, a carrier protein, a colour agent, a detergent, an antioxidant and a buffer. For example the diagnostic mixture may comprise a combination of anti-beta HCG 5501APC, PAK bovine IgG (Roche), BSA (Roche), Brilliant Black BN, Poly-Vinyl Pyrrolidon, Sucrose. Tween 20, Ascorbic Acid, HEPES pH 7.4 10mM On, 10x PBS mM related to PO4 3mM and H₂O to 100%.

The anti-beta HCG 5501APC can be used in the sandwich assay shown the fluorescently labelled detection reagent. APC Allophycocynine is the fluorescing molecule moiety. Instead of APC other suitable fluorophores can be used such as Cy5, Dy649 Bodipy and so on. The amount of anti-beta HCG 5501APC may be comprised between 10 µg/mL and 50 µg/mL, preferably between around 20 µg/mL and 40 µg/mL or around 30 µg/mL.

The PAK bovine IgG (Roche) is an animal protein and serves as a blocking agent by capturing any human anti animal reactivities in the human plasma samples. Alternatively, horse, chicken, mouse, rat, goat, sheep proteins may be used. The concentration is variable and should be considerably higher than the specific detection reagent respectively capturing regent at the bottom of the well. The concentration may be comprised between 1 and 30 mg/mL, or between 2 and 10 mg/mL. It may be around 5 mg/mL.

BSA (Roche) is a commonly used carrier protein used in immune assays. Polymerized BSA can be used as well. Concentrations can vary from anywhere between 1 to 20 mg/mL. It is preferably around 5mg/mL.

Brilliant Black BN is a blue colour and serves as a chemical blocker absorbing residual stray light that enters the bulk volume in the well and can give rise to a background fluorescent signal. Brilliant black can be substituted by other non-fluorescing blue colour such as Brilliant Blue or by green colour such as Chlororphyll or the by a simple Black colour or then coloured nanobeads in the bulk voulume of the liquid. The concentration may be comprised between 0.1 and 5 mg/mL. It is preferably around 0.2 mg/mL.

Poly-Vinyl Pyrrolidon 0.5% is a commonly used bulking reagent and improves and augments the signals of non-covalent interaction. Concentrations ranges to be used are anywhere from 0.1 to 5%.

Sucrose. is acting as reagent stabilising proteins when they are dried. Sucrose is a simple and low cost sugar acting as drying protector for proteins. Also, sucrose is used as lyoprotectant commonly in lyophilised product. Other sugars can be used here, notably threhalose is well known to be used as lyoprotectant and stabilising agent of dry proteins. Concentrations may be comprised between around 0.1 to 10%, or between 0.5 and 5 %. It may be for example around 1%.

Tween 20 is a detergent commonly used in immune assay at concentrations above the critical micelle concentration. Obviously the Tween 20 can be replaced by other detergents either anionic, cationic or noncharged detergents and serves a reagent to reduce non-specific binding. Amphoteric detergents, carrying positive and negative charges can be used also. The amount of such a detergent may be comprised between 0.01 and 1%. It may be around 0.05%.

Ascorbic Acid is used as antioxidant and serves to protect the fluorophore from radiation damage. Other antioxidants such as for example butylhydroxy toluol can be used. The concentration of the antioxidant may be comprised between around 0.1 and 2%. It may be for example around 0.125%.

HEPES pH 7.4 10mM is a buffering compound and serves to stabilise the pH of the solution during the drying process. Other buffers can be used such a phosphate buffers or organic buffer systems such as citrate, Tris, Bistrispropane, MOPS. Concentrations can vary from 1 to 20 mM buffering substance in exceptional cases up to 50 mM or even 100 mM.

10x PBS, mM related to PO₄ 3mM serves as a buffering substance and sodium chloride serves a as a solubility enhancing compound increasing the solubility of the reagents.

H₂O to is added to make up the volume to 100%. It is preferably sterilised water.

The component concentrations given are only indicative and can vary accordingly over a range being 10 times less and up to three times higher.

Optionally the mix can be supplemented with Poly ethylene glycol acting twofold as a reaction enhancer and as a cryoprotectant preventing damage to sensitive proteins to the damaging effect of freezing.

Also optionally, mouse IgG may be added to block any human anti mouse antibodies, HAMA, present occasionally in human plasma sample. This mouse IgG can be presented as monomer or as polymerised mouse IgG.

The present invention also relates to a method of diagnose or a method of analysing a fluid biological sample.

Such a method comprises the step of adding a diagnostic mixture on a filter integrated to the device described above. The diagnostic mixture may be placed on the first filter **201** within the device. Alternatively, an external filter may be treated with the diagnostic mixture.

The diagnostic mixture is then let to dry in air. This drying step may be performed at ambient pressure and ambient temperature. Alternatively, the drying step may be performed at a temperature higher than 20°C and below around 40°C. Alternatively, the diagnostic mixture may be subject to lyophilization and/or freeze drying to remove the water.

The diagnostic method also includes the step of placing a sample onto the first filter **201** within the device, wherein the sample corresponds to a crude sample directly taken out of the patient body. The sample is placed once the reagents and the potential additives included to the first filter or to an additional filter, are dry.

Then, the optical detection allows to identify the targeted analyte and record the measurement overtime. The amount of the analyte may be determined since the intensity of the optical detection is related to its concentration. The optical detection includes illuminating the sensing surface bound fluorophor through the evanescent field of a light source and measuring the generated fluorescent light.

Samples tested are A. 15 microliter Human blood plasma resp. B. 15 microliter Human whole blood. The binding of the anti beta HCG APC comnjugate 5501 APC to the surface bound beta HCG is measured in realtime and the increase in Pton counts over ten minutes is recorded. This increase in photens represent signal and is proportional to the concentration of the analyte, in this case here the anti-beta HCG APC, and is given as the increase in signal over a measurement time of 10 mintues and the unit counts per second abbreviated cps. Result are expressed in net counts by taking the signal of beta HCG coated wells and subtracting the background negative signal of well that had not been coated with beta HCG. Two different matrices were used 1 human plasma and 2 human EDTA blood of a healthy male donor.

| Filter | Plasma | | Blood EDTA anti-coagulated | |
|---|---|---|---|---|
| | Net delta counts [cps] | | Net delta counts [cps] | |
| Duplicate measurement! | Measure 1 | measure 2 | Measure 1 | measure 2 |
| 1 Ahlstrom 8964 | 157'571 | 156'114 | 179'676 | 146'130 |
| 2 Millipore GFCP203000 | 209'059 | 134'184 | 23843 | 6'310 |

Result: For the Ahlstrom blood filter one observes the same signal when using either Blood plasma or when using whole EDTA anticoagulated blood. Duplicate values are good. For the Millipore membrane the blood plasma gives good signal, however when using anticoagulated EDTA blood the signal is reduced and duplicate values are less precise. Nevertheless, both membranes work as blood filtration membranes and both membranes can be used to dry a detection mix with fluorophore on the membranes.

The blood filtration process works effectively and allows to measure analytes in whole blood Using the evanesce biosensor technology.

The present invention may contain or be defined by one or more of the following features:
It allows to measure substances following the steps of presenting a surface which contains at least one reaction partner L1 bound to the surface, contacting the surface with a solution containing the substance to be measured and a fluorescently labelled ligand L2 where each of the ligands binds either alone or in combination with the substance to form a complex, and illuminating the surface bound fluorophor through the evanescent field of a light source and measuring the generated fluorescent light, wherein all reagents for the measurement are present in a dry form in the device and dissolved by a liquid.

All reagents for a test are presented in dry form and the only liquid to solubilise and dissolve all reagents required is the liquid from the biological sample.

A porous filter membrane is positioned directly on the sensing surface.

The filter membrane is produced in situ in the well by adding a fibre containing suspension to the bottom of the well and removing the liquid by drying.

The fibres have a diameter of 0.5 to 10 micrometer, preferably 1 to 1-5 micrometer.

The pore size of the filter allows passage of molecular compounds and not allowing passage of cellular compounds.

A porous filter membrane or a dried fibre layer is positioned directly on the sensing surface and the reagents required to measure the substance from the biological samples are dried on the porous membrane filter.

Two individual membranes are directly in contact with the sensing surface. Membrane 1 removes the particulate matter form the sample and membrane 2 has the required reagents for the test in dried form coated on it

The reaction chamber where the evanescence field is generated has a volume of 0.1 to 30 microlitres.

A cyclical or elliptic surface illuminated by excitation light has a area of 0.1 to 20 square millimetre, preferably between 0.3 and 7 square millimetres and especially preferred between 1 and 3 square millimetres.

Diagnostics tests device according to anyone of the previous claims characterized that the volume of the reaction is determined by the geometrical space in the device.

The device is sterile.

### reference symbols in the figures

- 201: First filter
- 202: Second filter
- 203: Sensing surface
- 204: Bottom recipient
- L1: First ligand
- 206: Fluorescently labelled ligand
- 207: Sample area
- 301: interstitial space
- 302: Filter fibres
- 303: Bottom surface
- 404: Prism
- L1: First ligand
- L2: Second ligand
- 501: Analyte

## Claims

1. Diagnostic device comprising a bottom recipient (204) having a sample area (207), wherein the bottom recipient (204) comprises an evanescent sensing surface (203) and optical detection means, wherein the sample area (207) comprises at least a first filter (201) provided with fibres (302) defining interstitial space (301) the first filter being placed on or above the evanescent sensing surface (203), **characterized in that** said at least first filter comprises one or more reagents freely dispersed within the interstitial space as dry elements, and includes a first ligand (L1) and a fluorescent label.

2. Device according to claim 1, **characterized in that** said first filter (201) is placed above the sensing surface (203) and **in that** the sensing surface is coated with at least a second ligand (L2).

3. Device according to one of claims 1 or 2, further comprising a second filter (202) placed below the first filter (201).

4. Device according to claim 3, wherein said second filter is placed in direct contact with the sensing surface and comprises at least a second ligand (L2).

5. Device according to one of claims 1 to 4, **characterized in that** the first filter is permanently integrated within the diagnostic device.

6. Device according to claim 5, wherein said first filter results from a dried fibre containing suspension placed within the sample area (207).

7. Device according to one of claims 1 to 6, wherein said filter fibres have a diameter of 0.5 to 10 micrometer, preferably 1 to 1-5 micrometer.

8. Device according to anyone of the previous claims, wherein the porosity of the first filter is lower than around 100 micrometres, preferably lower than 1 micrometres.

9. Device according to any one of claims 1 to 8, wherein the sample area (207) has a volume of 0.1 to 30 microlitres.

10. Device according to anyone of the previous claims, wherein the porosity of the first filter is adapted to block the diffusion of element larger than 1 micrometre, preferably larger than 10 micrometres, and more preferably larger than 100 micrometres.

11. Diagnostic method using the device defined through any one of claims 1 to 10, the method comprising the step of adding a diagnostic mixture on a filter integrated to the device and a step of drying such diagnostic mixture so that the diagnostic reagents are dispersed within the filter under a dry form.

12. Diagnostic method according to claim 11, further comprising the step of placing a biological sample onto said filter, wherein the biological sample is a crude biological sample directly taken out of a patient body.

## Patentansprüche

1. Diagnosevorrichtung, umfassend einen Bodenempfänger (204) mit einem Probenbereich (207), wobei der Bodenempfänger (204) eine Evaneszenzsensorfläche (203) und optische Detektionsmittel umfasst, wobei der Probenbereich (207) mindestens einen ersten Filter (201), der mit Fasern (302) versehen ist, die einen Zwischenraum (301) definieren, umfasst, wobei der erste Filter auf oder über der Evaneszenzsensorfläche (203) angeordnet ist, **dadurch gekennzeichnet, dass** der mindestens erste Filter ein oder mehrere Reagenzien umfasst, die frei in dem Zwischenraum als trockene Elemente dispergiert sind, und einen ersten Liganden (L1) und einen Fluoreszenzmarkierung enthält.

2. Vorrichtung nach Anspruch 1, **dadurch gekennzeichnet, dass** der erste Filter (201) oberhalb der Sensorfläche (203) angeordnet ist und dass die Sensorfläche mit mindestens einem zweiten Liganden (L2) beschichtet ist.

3. Vorrichtung nach einem der Ansprüche 1 oder 2, weiter umfassend einen zweiten Filter (202), der unterhalb des ersten Filters (201) angeordnet ist.

4. Vorrichtung nach Anspruch 3, wobei der zweite Filter in direktem Kontakt mit der Sensoroberfläche angeordnet ist und mindestens einen zweiten Liganden (L2) umfasst.

5. Vorrichtung nach einem der Ansprüche 1 bis 4, **dadurch gekennzeichnet, dass** der erste Filter fest in die Diagnosevorrichtung integriert ist.

6. Vorrichtung nach Anspruch 5, wobei der erste Filter aus einer getrockneten faserhaltigen Suspension hervorgeht, die in dem Probenbereich (207) angeordnet ist.

7. Vorrichtung nach einem der Ansprüche 1 bis 6, wobei die Filterfasern einen Durchmesser von 0,5 bis 10 Mikrometer, vorzugsweise 1 bis 1-5 Mikrometer, aufweisen.

8. Vorrichtung nach einem der vorhergehenden Ansprüche, wobei die Porosität des ersten Filters kleiner als etwa 100 Mikrometer, vorzugsweise kleiner als 1 Mikrometer ist.

9. Vorrichtung nach einem der Ansprüche 1 bis 8, wobei die Probenfläche (207) ein Volumen von 0,1 bis 30 Mikrolitern aufweist.

10. Vorrichtung nach einem der vorhergehenden Ansprüche, wobei die Porosität des ersten Filters geeignet ist, die Diffusion von Elementen zu blockieren, die größer als 1 Mikrometer, vorzugsweise größer als 10 Mikrometer und besonders bevorzugt größer als 100 Mikrometer sind.

11. Diagnoseverfahren unter Verwendung der Vorrichtung nach einem der Ansprüche 1 bis 10, wobei das Verfahren den Schritt des Zugebens einer Diagnosemischung auf einen Filter, der in die Vorrichtung integriert ist, und einen Schritt des Trocknens dieser Diagnosemischung umfasst, so dass die Diagnosereagenzien in trockener Form in dem Filter dispergiert werden.

12. Diagnoseverfahren nach Anspruch 11, weiter umfassend den Schritt des Aufbringens einer biologischen Probe auf den Filter, wobei die biologische Probe eine biologische Rohprobe ist, die direkt aus dem Körper eines Patienten entnommen wurde.

## Revendications

1. Dispositif diagnostique comprenant un récepteur inférieur (204) ayant une zone d'échantillon (207), dans lequel le récepteur inférieur (204) comprend une surface de détection évanescente (203) et des moyens de détection optiques, dans lequel la zone d'échantillon (207) comprend au moins un premier filtre (201) pourvu de fibres (302) définissant un espace interstitiel (301), le premier filtre étant placé sur ou au-dessus de la surface de détection évanescente (203), **caractérisé en ce que** ledit au moins premier filtre comprend un ou plusieurs réactifs dispersés librement au sein de l'espace interstitiel en tant qu'éléments secs, et inclut un premier ligand (L1) et un marqueur fluorescent.

2. Dispositif selon la revendication 1, **caractérisé en ce que** ledit premier filtre (201) est placé au-dessus de la surface de détection (203) et **en ce que** la surface de détection est enduite d'au moins un second ligand (L2).

3. Dispositif selon une des revendications 1 ou 2, comprenant en outre un second filtre (202) placé en dessous du premier filtre (201).

4. Dispositif selon la revendication 3, dans lequel ledit second filtre est placé en contact direct avec la surface de détection et comprend au moins un second ligand (L2).

5. Dispositif selon une des revendications 1 à 4, **caractérisé en ce que** le premier filtre est intégré de manière permanente au sein du dispositif diagnostique.

6. Dispositif selon la revendication 5, **caractérisé en ce que** ledit premier filtre résulte d'une fibre séchée contenant de la suspension placée au sein de la zone d'échantillon (207).

7. Dispositif selon une des revendications 1 à 6, dans lequel lesdites fibres de filtre ont un diamètre de 0,05 à 10 micromètres, de préférence 1 à 1,5 micromètre.

8. Dispositif selon l'une quelconque des revendications précédentes, dans lequel la porosité du premier filtre est inférieure à environ 100 micromètres, de préférence inférieure à 1 micromètre.

9. Dispositif selon l'une quelconque des revendications 1 à 8, dans lequel la zone d'échantillon (207) a un volume de 0,1 à 30 microlitres.

10. Dispositif selon l'une quelconque des revendications précédentes, dans lequel la porosité du premier filtre est adaptée à bloquer la diffusion d'élément supérieur à 1 micromètre, de préférence supérieur à 10 micromètres, et plus préférablement supérieur à 100 micromètres.

11. Procédé diagnostique utilisant le dispositif défini par l'une quelconque des revendications 1 à 10, le procédé comprenant l'étape d'ajout d'un mélange diagnostique sur un filtre intégré au dispositif et une étape de séchage d'un tel mélange diagnostique de sorte que les réactifs diagnostiques sont dispersés au sein du filtre sous une forme sèche.

12. Procédé diagnostique selon la revendication 11, comprenant en outre l'étape de placement d'un échantillon biologique sur ledit filtre, dans lequel l'échantillon biologique est un échantillon biologique brut prélevé directement d'un corps de patient.
